# EUROPÄISCHE PATENTSCHRIFT

(11) **EP 1 215 218 B1**
(45) Veröffentlichungstag und Bekanntmachung des Hinweises auf die Patenterteilung: **28.09.2005**
(21) Anmeldenummer: 01128478.3
(22) Anmeldetag: 06.12.2001
(51) Int. Cl.: C08F 6/00, C08J 3/12, C04B 40/00

(54) **Verfahren zur Herstellung von Polymerisaten mit reduziertem Gehalt an flüchtigen Komponenten**
Process for the preparation of polymers having a reduced content of volatile components
Procédé de préparation de polymères ayant un contenu réduit de composants volatiles

(30) Priorität: 14.12.2000 DE 10062177
(43) Veröffentlichungstag der Anmeldung: 19.06.2002
(73) Patentinhaber: Wacker Polymer Systems GmbH & Co. KG, 84489 Burghausen (DE)
(72) Erfinder: Weitzel, Hans-Peter, Dr., 84571 Reischach (DE)
(74) Vertreter: Schuderer, Michael

(56) Entgegenhaltungen:
- EP-A- 0 134 451
- EP-A- 0 465 964
- EP-A- 0 693 501
- EP-A- 1 065 225

## Beschreibung

Die Erfindung betrifft ein Verfahren zur Herstellung von mit Schutzkolloiden stabilisierten Polymerisaten in Form deren in Wasser redispergierbaren Pulver oder wässrigen Dispersionen mit reduziertem Gehalt an flüchtigen Komponenten.

Das wachsende ökologische Bewußtsein bringt zunehmende Forderungen am Markt nach Restmonomerfreiheit und Lösemittelfreiheit mit sich. Zusammenfassend werden diese Forderungen als "VOCfrei" benannt (VOC= Volatile Organic Compound). Während sich VOC-freie Polymerdispersionen schon weitestgehend durchgesetzt haben, ist dies bei Redispersionspulvern noch nicht der Fall. Ursächlich hierfür dürfte sein, dass die flüchtigen Komponenten in dem festen Compound schwieriger zu entfernen sind als in flüssigen Produkten, und dass bei der Anwendung von Redispersionspulvern in wässrigen Rezepturen die flüchtigen Bestandteile in aller Regel gebunden werden. Restliches Vinylacetat wird beispielsweise in Anwendungen in zementärem Milieu, dem Hauptanwendungsgebiet von Redispersionspulvern, direkt zu Calciumacetat und Acetaldehyd verseift, wobei letzterer sofort Aldolkondensationen unterliegt. Desgleichen geschieht mit anderen Estern wie Methyl- oder Ethylacetat oder mit Aceton (Aldolkondensation).

Untersuchungen in jüngster Vergangenheit zeigen jedoch, dass dennoch erhebliche Belastungen durch flüchtige Bestandteile auftreten können, beispielsweise wird bei der Anwendung von Redispersionspulvern auf Vinylacetatbasis in Verlaufsmassen oder Estrichen Acetaldehyd freigesetzt. Der Acetaldehyd liegt als solcher im Pulver vor oder wird aus im Pulver vorliegendem Rest-Vinylacetat durch Verseifung gebildet.

Aus dem Stand der Technik sind eine Reihe von Verfahren zur Entfernung flüchtiger Bestandteile aus Polymerisaten bekannt. Es wird dabei zwischen chemischen und physikalischen Verfahren zur Desodorierung unterschieden. Die chemischen Verfahren zeichnen sich durch Zugabe von Stoffen aus, die mit den Restmonomeren reagieren und dadurch deren Gehalt verringern. Die physikalischen Verfahren beruhen im wesentlichen auf Destillationsphänomenen mit Dampf oder Inertgasen wie Stickstoff als Schlepper. Zusätzlich werden Kombinationen von beiden Verfahren beschrieben.

Die DE-A 19741185 beschreibt die Verminderung des Restmonomergehaltes von Polymerdispersionen durch Nachpolymerisation mit einem speziellen Redoxsystem aus Carbonsäure und Peroxidverbindung. Ein weiteres chemisches Verfahren zur Entfernung von Restmonomer aus Polyvinylesterdispersionen ist aus der EP-B 505959 bekannt: Dabei wird die Polyvinylesterdispersion einer Verseifungsbehandlung bei schwach alkalischem pH und einer anschliessenden oxidativen Behandlung unterzogen. In der DE-A 19741189 wird ein chemisches Verfahren zur Entfernung von Restmonomeren beschrieben, bei dem ein nucleophiles Agens in einem speziell dimensioniertem Reaktor in definierter Mischzeit zudosiert wird.

Die physikalische Entfernung von flüchtigen Reststoffen aus Polymerdispersionen mittels Einleiten von Dampf ist aus der DE-A 19745580, und mittels Inertgas, beispielsweise Luft oder Stickstoff, ist aus der DE-A 4118526 bekannt. Ein kombiniertes Verfahren zur Entfernung flüchtiger Bestandteile, bei dem zunächst eine Nachpolymerisation mit Redoxinitiator und anschliessend eine Inertgasbehandlung durchgeführt wird, ist aus der DE-A 19828183 bekannt. Bei dem Verfahren aus der EP-A 650977 werden die Restmonomere zunächst mittels Nachpolymerisation und anschliessend mittels Dampfstrippen entfernt. Die EP-A 465964 beschreibt ein Verfahren zur Entfernung von flüchtigen Bestandteilen aus Emulsionspolymerisaten, wobei diese zunächst sprühgetrocknet werden, und anschliessend das Pulver mit Inertgas nachbehandelt wird.

Bekanntermassen tragen chemische Massnahmen zur Reduzierung der Restmonomeren dazu bei, dass andere flüchtige Komponenten wie tert.-Butanol und Aceton in die Dispersion eingetragen werden. Es ist daher unsinnig und unwirtschaftlich diese Massnahmen bis zu extrem niedrigen Restmonomerwerten durchzuführen, da gleichzeitig der Gehalt an anderen flüchtigen Komponenten überproportional zunimmt. Andererseits ist bekannt, dass physikalische Desodorierung zu Schädigungen der Dispersion - von Stippen bis hin zu Koagulat - führen kann. Eine ausschliessliche physikalische Desodorierung ist daher auch nicht sinnvoll, da durch zu hohe Belastungen auch nach bestem Verfahrensstand Schädigungen der Produkte zu erwarten sind. Weiterer erheblicher Nachteil der physikalischen Desodorierung sind die erheblichen Mengen an mit organischen Bestandteilen verunreinigtem Kondensat (ca. 10 bis 20 % auf eingesetzte Dispersion), das je nach Zusammensetzung aufwendig entsorgt werden muss.

Ein zusätzliches Problem bei der Herstellung von Redispersionspulver ist die Verwendung von methanolhaltigem Polyvinylalkohol als Verdüsungsschutzkolloid. Dieses Schutzkolloid wird der Dispersion erst nach deren chemischer und physikalischer Desodorierung zugesetzt, so dass der Methanolgehalt voll eingebracht wird.

Der Erfindung lag somit die Aufgabe zugrunde, ein wirtschaftliches Verfahren zur Herstellung von mit Schutzkolloiden stabilisierten Polymerisaten in Form deren in Wasser redispergierbaren Pulver oder wässrigen Dispersionen mit reduziertem Gehalt an flüchtigen Komponenten zur Verfügung zu stellen, das die Nachteile des Stands der Technik vermeidet.

Gegenstand der Erfindung ist ein Verfahren zur Herstellung von mit Schutzkolloiden stabilisierten Polymerisaten in Form deren in Wasser redispergierbaren Pulver oder wässrigen Dispersionen mit reduziertem Gehalt an flüchtigen Komponenten mittels
a) Emulsions-oder Suspensionspolymerisation von einem oder mehreren Monomeren aus der Gruppe umfassend Vinylester, (Meth)-acrylsäureester, Vinylaromaten, Olefine, 1,3-Diene und Vinylhalogenide und gegebenenfalls weiteren damit copolymerisierbaren Monomeren,
b) Nachbehandlung der damit erhaltenen Polymerdispersion mittels Nachpolymerisation und/oder Destillation, Einleiten von Dampf oder Inertgas bis zu einem Restgehalt an flüchtigen, nichtwässrigen Komponenten von < 2000 ppm, und anschließender
c) Sprühtrocknung der nachbehandelten Polymerdispersion bis zu einem Restgehalt an flüchtigen, nichtwässrigen Komponenten von < 400 ppm, wobei die Dispersion vor der Versprühung auf einen Festgehalt von < 45 Gew.-% eingestellt wird, und die Sprühtrocknung mit Luft mit einer Eintrittstemperatur > 120°C durchgeführt wird, und gegebenenfalls
d) Redispergierung des damit erhaltenen Pulvers in Wasser.

Als flüchtige Komponenten (VOC) werden nichtwässrige Verbindungen wie Restmonomere, Zerfallsprodukte von Monomer und Initiator, Verunreinigungen in Polymerisationshilfsstoffen verstanden; beispielsweise Restmonomere wie Vinylacetat, Alkyl(meth)acrylat und Styrol; Zerfallsprodukte oder Verunreinigungen wie Acetaldehyd, Methanol, Ethanol, tert.-Butanol, Aceton, Essigsäuremethylester und Essigsäureethylester.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden Monomere oder Monomermischungen, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Mischungen mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, daß im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt in an sich bekannter Weise nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol% und einer Höpplerviskosität in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten, alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere geeignete Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd, erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015). Die genannten Schutzkolloide sind mittels dem Fachmann bekannter Verfahren zugänglich.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Schutzkolloide werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Die Monomere können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 50 bis 100 Gew.-%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden.

Bei der Herstellung VOC-armer Redispersionspulver, auf der Basis von mit Polyvinylalkohol als Schutzkolloid stabilisierten Polymerisaten, kommt dem Methanolgehalt des verwendeten Polyvinylalkohols große Bedeutung zu. Polyvinylalkohole enthalten herstellungsbedingt erhebliche Mengen an Methanol. Die Methanolfracht des Polyvinylalkohols wird einerseits über die Dispersion eingebracht in der der Polyvinylalkohol als Schutzkolloid in der Polymerisation fungiert, andererseits wird Polyvinylalkohol auch erst vor der Verdüsung als Verdüsungsschutzkolloid zugesetzt und bringt an dieser Stelle Methanol in das System. Methanol kann als inerter Stoff nur durch physikalische Methoden wie Destillation abgetrennt werden. Vorteilhafterweise wird dies direkt bei der Herstellung der Polyvinylalkohollösung, welche dem Polymerisationsansatz bzw. der fertigen Dispersion vor der Verdüsung zugegeben wird, durchgeführt. Grosstechnisch hergestellte Ware wird mit ca. 3 Gew.-% Methanol verkauft. Im Rahmen der vorliegenden Erfindung wird Polyvinylalkohol bevorzugt mit einem Restgehalt < 2 Gew.-%, besonders bevorzugt < 1 Gew.-% Methanol eingesetzt.

Alternativ zur Abtrennung bei der Herstellung der Polyvinylalkohollösung kann das Methanol natürlich auch durch Wasserdampfdestillation der Dispersion abgetrennt werden. Zu beachten ist allerdings, dass die Destillation an der richtigen Stelle der Prozesskette erfolgt, also idealerweise erst wenn der Polyvinylalkohol, der als Verdüsungsschutzkolloid dient, bereits zugesetzt ist. Dies ist in der Praxis allerdings meist nicht realisierbar, da die physikalische Desodorierung in anderen Anlagen erfolgt als die Sprühtrocknung, so dass der Methanolabtrennung beim Löseschritt der Vorzug zu geben ist. Als weitere Variante kann eine der Sprühtrocknung vorgeschaltete kontinuierliche Destillation über eine Kolonne in Erwägung gezogen werden was aber zusätzlichen erheblichen prozesstechnischen Aufwand erfordert.

Nach Abschluss der Polymerisation wird der Anteil an flüchtigen, nichtwässrigen Komponenten in der erhaltenen Dispersion auf ≤ 2000 ppm, vorzugsweise ≤ 1000 ppm, am meisten bevorzugt ≤ 500 ppm reduziert. Dies kann mittels Nachpolymerisation, durch Destillation, Durchleiten oder Überleiten von Inertgasen wie Dampf, oder einer Kombination dieser Massnahmen erfolgen.

Zur Nachpolymerisation werden Redoxinitiatorsysteme beispielsweise mit den obengenannten Oxidationsmitteln und Reduktionsmitteln eingesetzt. Im allgemeinen wird für die Nachpolymerisation ein Initiatorsystem eingesetzt, welches von dem für die Hauptpolymerisation verwendeten verschieden ist. Zur Nachpolymerisation bevorzugt werden Redoxkombinationen von Wasserstoffperoxid, Natrium- bzw. Kaliumperoxid oder tert.-Butylhydroperoxid mit Natriumsulfit, Alkaliformaldehydsulfoxylate oder Ascorbinsäure. Die Nachpolymerisation wird im allgemeinen bei Temperaturen von 30°C bis 60°C und über einen Zeitraum von 0.5 bis 3 Stunden durchgeführt. Die Komponenten des Redoxsystems können stossweise zugegeben werden oder kontinuierlich zudosiert werden. Die Menge Oxidationsmittel und Reduktionsmittel beträgt im allgemeinen 0.01 bis 0.4 Gew.-%, bezogen auf Gesamtmonomer.

Die flüchtigen Komponenten können auch mittels Destillation, vorzugsweise unter reduziertem Druck, oder unter Durchleiten oder Überleiten von inerten Schleppgasen wie Luft, Stickstoff oder Wasserdampf entfernt werden. Bei der Nachbehandlung mit Wasserdampf wird vorzugsweise so vorgegangen, dass nicht mehr als 5 bis 10 Gew.-% Kondensat, bezogen auf Dispersion, eingetragen werden. Im allgemeinen wird die Nachbehandlung bei 50°C bis 80°C, unter einem Vakkuum von 200 bis 500 mPas und über ein bis drei Stunden durchgeführt. Besonders bevorzugt wird im ersten Schritt zur Entfernung der flüchtigen Komponenten die Nachpolymerisation mit einer Inertgasbehandlung kombiniert.

Zur Herstellung der in Wasser redispergierbaren Polymerpulver werden die wässrigen Dispersionen, nach Zusatz von Schutzkolloiden als Verdüsungshilfe, sprühgetrocknet. Der Festgehalt der Dispersion wird vor der Sprühtrocknung auf Werte unter 45 Gew.-%, vorzugsweise 30 bis 40 Gew.-%, eingestellt. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Wesentlich ist, dass die Eintrittstemperatur des Gasstromes > 120°C beträgt. Mit der Sprühtrocknung wird der Gehalt an nichtwässrigen, flüchtigen Bestandteilen im Pulver auf Werte < 400 ppm, vorzugsweise 1 bis 250 ppm, insbesondere 1 bis 50 ppm reduziert.

In der Regel wird die Verdüsungshilfe in einer Gesamtmenge von 3 bis 30 Gew.-%, bezogen auf die polymeren Bestandteile der Dispersion, eingesetzt. Das heisst die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt sind Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015). Besonders bevorzugt werden keine weiteren Schutzkolloide als Polyvinylalkohole als Verdüsungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Wässrige Polymerdispersionen mit reduziertem Gehalt an flüchtigen, nichtwässrigen Komponenten werden durch Redispersion der sprühgetrockneten Pulver in Wasser erhalten. Üblicherweise werden dabei Festgehalte von 50 bis 60 Gew.-% eingestellt. Bei Herstellung einer 50 %-igen Redispersion reduziert sich der Anteil an flüchtigen Komponenten in ppm gegenüber dem Pulver nochmals um die Hälfte.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien, Fasern, Holz und Papier.

Die nachfolgenden Beispiele dienen der weiteren Erläuterung der Erfindung:

### Beispiel 1 (Allgemeine Vorschrift zur Herstellung der Dispersion und des Pulvers):

Mittels Emulsionspolymerisation wurde eine wässrige Dispersion eines Vinylacetat-Ethylen-Copolymerisats mit 100 Gew.-Teilen Vinylacetat und 12 Gew.-Teilen Ethylen hergestellt. Die Polymerisation wurde in Gegenwart von 10 Gew.-%, bezogen auf Vinylacetat, eines Polyvinylalkohols mit einem Hydrolysegrad von 88 Mol-% und einer Viskosität nach Höppler von 4 mPas und einem Methanolgehalt von ca. 2 Gew.-% durchgeführt.
Es wurde eine Dispersion mit einem VOC-Gehalt von 6000 ppm (davon 5000 ppm Vinylacetat) erhalten.
Die Dispersion wurde mit 5 Gew.-% (fest/fest) Polyvinylalkohol mit einem Hydrolysegrad von 88 Mol% und einer Viskosität nach Höppler von 4 mPas versetzt und mit Wasser verdünnt. Die Dispersion wurde dann mittels Zweistoffdüse versprüht. Als Verdüsungskomponente diente auf 4 bar vorgepresste Luft. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Vergleichsbeispiel 2:

Die Dispersion aus Beispiel 1 wurde mit 0.1 Gew.-% t-Butylhydroperoxid (TBHP) und mit 0.1 Gew.-% Natriumsulfit, jeweils bezogen auf Gesamtmonomer bei einer Temperatur von 45°C für eine Stunde nachpolymerisiert bis ein VOC-Gehalt von 1600 ppm (davon 1000 ppm Vinylacetat) erhalten wurde. Vor der Verdüsung wurde der Festgehalt der Speise auf 45 % eingestellt. Durch anschließende Sprühtrockung bei 117°C Eintrittstemperatur der Luft wurden folgende Rest-VOC-Werte im Pulver erreicht:

| | | |
|---|---|---|
| Vinylacetat | 480 ppm | |
| Acetaldehyd | 32 ppm | |
| Methanol | 16 ppm | |
| tert.-Butanol | 62 ppm | |
| Aceton | 20 ppm | |
| Methylacetat | 34 ppm | |
| Ethylacetat | 54 ppm | Summe: 698 ppm |

### Beispiel 3:

Die Dispersion aus Beispiel 1 wurde mit 2 Gew.-% Dampf/h, bezogen auf Dispersion für 3 h gestrippt bis ein Rest-VOC-Gehalt von 1000 ppm (Vinylacetat < 400 ppm) erhalten wurde.
Die Verdüsung wurde analog Beispiel 1 durchgeführt, mit dem Unterschied, dass die Dispersion auf einen Festgehalt von 40 % eingestellt wurde, und anschliessend mit Luft mit einer Eintrittstemperatur von 125°C verdüst wurde. Es wurden folgende Rest-VOC-Werte im Pulver erreicht:

| | | |
|---|---|---|
| Vinylacetat | 82 ppm | |
| Acetaldehyd | 2 ppm | |
| Methanol | 10 ppm | |
| tert.-Butanol | 10 ppm | |
| Aceton | 10 ppm | |
| Methylacetat | 10 ppm | |
| Ethylacetat | 10 ppm | Summe: 134 ppm |

### Beispiel 4:

Die Dispersion aus Beispiel 1 wurde analog Vergleichsbeispiel 2 mit TBHP und Natriumsulfit nachpolymerisiert bis ein Restvinylacetatniveau von < 1000 ppm erhalten wurde und anschließend analog Beispiel 3 mit 2 Gew.-% Dampf/h für 3 h gestrippt. Der Rest- VOC-Gehalt betrug ca. 200 ppm (VAc < 100 ppm).
Es wurde analog Beispiel 3 verdüst: Der Festgehalt der Speise wurde auf 40 % eingestellt, und bei 125°C Eintrittstemperatur der Luft sprühgetrocknet. Es wurden folgende Rest-VOC-Werte erreicht:

| | | |
|---|---|---|
| Vinylacetat | 12 ppm | |
| Acetaldehyd | 2 ppm | |
| Methanol | 10 ppm | |
| tert.-Butanol | 10 ppm | |
| Aceton | 10 ppm | |
| Methylacetat | 16 ppm | |
| Ethylacetat | 10 ppm | Summe: 70 ppm |

### Vergleichsbeispiel 5:

Die Dispersion aus Beispiel 1 wurde lediglich analog Beispiel 3 mit 2 Gew.-% Dampf/h für 5 h gestrippt.
Es wurden folgende Rest-VOC-Werte der 50 %-igen Dispersion erhalten:

| | | |
|---|---|---|
| Vinylacetat | 9 ppm | |
| Acetaldehyd | 1 ppm | |
| Methanol | 9 ppm | |
| tert.-Butanol | 5 ppm | |
| Aceton | 5 ppm | |
| Methylacetat | 5 ppm | |
| Ethylacetat | 5 ppm | Summe: 39 ppm |

Der Siebrückstand bei Filtration über ein 70 µm Sieb nahm von 289 ppm (vor dem Strippen) auf 427 ppm zu.

### Vergleichsbeispiel 6:

Die Dispersion aus Beispiel 1 wurde analog Beispiel 4 mit TBHP und Natriumsulfit nachpolymerisiert bis ein Restvinylacetatniveau von < 1000 ppm erhalten wurde und anschließend mit 2 Gew.-% Dampf/h für 4 h gestrippt.
Die 50 %-ige Dispersion enthielt:

| | | |
|---|---|---|
| Vinylacetat | 19 ppm | |
| Acetaldehyd | 1 ppm | |
| Methanol | 37 ppm | |
| tert.-Butanol | 5 ppm | |
| Aceton | 5 ppm | |
| Methylacetat | 5 ppm | |
| Ethylacetat | 5 ppm | Summe: 77 ppm |

Der Siebrückstand bei Filtration über ein 70 µm Sieb nahm von 133 ppm (vor dem Strippen) auf 232 ppm zu.

### Vergleichsbeispiel 7:

Die Dispersion aus Beispiel 1 wurde analog Beispiel 4 mit TBHP und Natriumsulfit nachpolymerisiert bis Rest-VOC-Gehalt von ca. 5000 ppm (VAc ca. 4000 ppm) erhalten wurde. Der Festgehalt der Speise wurde auf 40 Gew.-% eingestellt und anschliessen analog Beispiel 1 bei 125°C Eintrittstemperatur der Luft sprühgetrocknet. Es wurden folgende Rest-VOC-Werte im Pulver erreicht:

| | | |
|---|---|---|
| Vinylacetat | 900 ppm | |
| Acetaldehyd | 28 ppm | |
| Methanol | 20 ppm | |
| tert.-Butanol | 22 ppm | |
| Aceton | 10 ppm | |
| Methylacetat | 16 ppm | |
| Ethylacetat | 30 ppm | Summe 1026 ppm |

### Vergleichsbeispiel 8:

Die Dispersion aus Beispiel 1 wurde analog Beispiel 4 mit TBHP und Brüggolit nachpolymerisiert bis ein Rest-VOC-Gehalt von ca. 1600 ppm (VAc < 1000 ppm) erhalten wurde. Der Festgehalt der Speise wurde auf 45 Gew.-% eingestellt. Durch anschliessende Sprühtrockung bei 126°C Eintrittstemperatur der Luft wurden folgende Rest-VOC-Werte erreicht:

| | | |
|---|---|---|
| Vinylacetat | 340 ppm | |
| Acetaldehyd | 24 ppm | |
| Methanol | 10 ppm | |
| tert.-Butanol | 56 ppm | |
| Aceton | 18 ppm | |
| Methylacetat | 24 ppm | |
| Ethylacetat | 42 ppm | Summe: 514 ppm |

### Beispiel 9:

Die Dispersion aus Beispiel 1 wurde analog Beispiel 4 mit TBHP und Natriumsulfit nachpolymerisiert bis ein Rest-VOC-Niveau von ca. 1000 ppm erhalten wurde. Der Festgehalt der Speise wurde vor dem Verdüsen auf ca. 40 Gew.-% eingestellt. Durch anschliessende Sprühtrockung bei 125°C Eintrittstemperatur der Luft wurden folgende Rest-VOC-Werte im Pulver erreicht:

| | | |
|---|---|---|
| Vinylacetat | 60 ppm | |
| Acetaldehyd | 2 ppm | |
| Methanol | 14 ppm | |
| tert.-Butanol | 110 ppm | |
| Aceton | 22 ppm | |
| Methylacetat | 20 ppm | |
| Ethylacetat | 22 ppm | Summe: 250 ppm |

### Vergleichsbeispiel 10:

Die Dispersion aus Beispiel 1 wurde analog Beispiel 4 mit TBHP und Natriumsulfit nachpolymerisiert bis ein Rest-VOC-Niveau von ca. 1600 ppm (VAc ca. 1000 ppm) erhalten wurde. Der Festgehalt der Speise wurde vor dem Verdüsen auf 45 Gew.-% eingestellt. Durch anschliessende Sprühtrockung bei 135°C Eintrittstemperatur der Luft wurden folgende Rest-VOC-Werte im Pulver erreicht:

| | | |
|---|---|---|
| Vinylacetat | 360 ppm | |
| Acetaldehyd | 26 ppm | |
| Methanol | 10 ppm | |
| tert.-Butanol | 54 ppm | |
| Aceton | 18 ppm | |
| Methylacetat | 24 ppm | |
| Ethylacetat | 44 ppm | Summe: 536 ppm |

### Vergleichsbeispiel 11:

Die Dispersion aus Beispiel 1 wurde analog Beispiel 4 mit TBHP und Natriumsulfit nachpolymerisiert bis ein Rest-VOC-Niveau von ca. 1600 ppm (VAc < 1000 ppm) erhalten wurde. Der Festgehalt der Speise wurde vor dem Verdüsen auf ca. 40 Gew.-% eingestellt. Durch anschliessende Sprühtrockung bei 103°C Eintrittstemperatur der Luft wurden folgende Rest-VOC-Werte im Pulver erreicht:

| | | |
|---|---|---|
| Vinylacetat | 240 ppm | |
| Acetaldehyd | 18 ppm | |
| Methanol | 18 ppm | |
| tert.-Butanol | 44 ppm | |
| Aceton | 12 ppm | |
| Methylacetat | 14 ppm | |
| Ethylacetat | 28 ppm | Summe: 374 ppm |

Der Vergleich der Vorgehensweise von Beispiel 3 mit Vergleichsbeispiel 5, oder von Beispiel 4 mit Vergleichsbeispiel 6 zeigt, dass mit der erfindungsgemässen Vorgehensweise auf schonende Art eine effektive Abtrennung von VOC's möglich ist, während allein mittels Entfernung durch Dampfstrippen und/oder Nachpolymerisation die Dispersion durch Koagulatbildung geschädigt wird.

Vergleicht man Vergleichsbeispiel 2 mit Vergleichsbeispiel 11 und Beispiel 9 so sieht man, dass für die Effektivität der VOC-Abtrennung die Randbedingungen der Sprühtrocknung von entscheidender Bedeutung sind. In Vergleichsbeispiel 2 ist der Festgehalt der Speise zu hoch und die Lufteintrittstemperatur zu niedrig, während in Vergleichsbeispiel 11 der Festgehalt der Speise richtig gewählt ist, aber die Eintrittstemperatur zu niedrig. In Beispiel 9, unter erfindungsgemässen Bedingungen, verläuft die VOC-Entfernung wesentlich effektiver.

Vergleichsbeispiel 7 zeigt im Vergleich zu Beispiel 9, dass bei ineffektiver VOC-Entfernung vor der Sprühtrocknung, selbst bei erfindungsgemässer Gestaltung der Sprühtrocknung die VOC-Entfernung wenig effektiv ist.

Vergleichsbeispiel 8 zeigt, dass im Vergleich zu Vergleichsbeispiel 2 mit höherer Eintrittstemperatur beim Sprühtrocknen bessere Ergebnisse erhalten werden, aber bei zu hohem Festgehalt der Speise der Reinigungseffekt noch unbefriedigend bleibt.

## Patentansprüche

1. Verfahren zur Herstellung von mit Schutzkolloiden stabilisierten Polymerisaten in Form deren in Wasser redispergierbaren Pulver oder wässrigen Dispersionen mit reduziertem Gehalt an flüchtigen Komponenten mittels
a) Emulsions-oder Suspensionspolymerisation von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren,
b) Nachbehandlung der damit erhaltenen Polymerdispersion mittels Nachpolymerisation und/oder Destillation, Einleiten von Dampf oder Inertgas bis zu einem Restgehalt an flüchtigen, nichtwässrigen Komponenten von < 2000 ppm, und anschliessender
c) Sprühtrocknung der nachbehandelten Polymerdispersion bis zu einem Restgehalt an flüchtigen, nichtwässrigen Komponenten von < 400 ppm, wobei die Dispersion vor der Versprühung auf einen Festgehalt von < 45 Gew.-% eingestellt wird, und die Sprühtrocknung mit Luft mit einer Eintrittstemperatur > 120°C durchgeführt wird, und gegebenenfalls
d) Redispergierung des damit erhaltenen Pulvers in Wasser.

2. Verfahren nach Anspruch 1, **dadurch gekennzeichnet, dass** Monomere oder Monomermischungen, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten, polymerisiert werden.

3. Verfahren nach Anspruch 1 und 2, **dadurch gekennzeichnet, dass** als Schutzkolloide teilverseifte Polyvinylalkohole mit einem Hydrolysegrad von 80 bis 95 Mol% und einer Höpplerviskosität von 1 bis 30 mPas oder teilverseifte, hydrophob modifizierte Polyvinylalkohole mit einem Hydrolysegrad von 80 bis 95 Mol% und einer Höpplerviskosität von 1 bis 30 mPas eingesetzt werden.

4. Verfahren nach Anspruch 1 bis 3, **dadurch gekennzeichnet, dass** die Nachbehandlung in Schritt b) bis zu einem Restgehalt an flüchtigen, nichtwässrigen Komponenten von ≤ 1000 ppm durchgeführt wird.

5. Verfahren nach Anspruch 1 bis 4, **dadurch gekennzeichnet, dass** zur Nachbehandlung in Schritt b) eine Nachpolymerisation, gegebenenfalls mit anschliessendem Durchleiten oder Überleiten von inerten Schleppgasen durchgeführt wird.

6. Verfahren nach Anspruch 1 bis 5, **dadurch gekennzeichnet, dass** mit der Sprühtrocknung in Schritt c) der Gehalt an flüchtigen Bestandteilen im Pulver auf 1 bis 250 ppm abgesenkt wird.

7. In Wasser redispergierbare Polymerpulver und wässrige Polymerdispersionen, erhältlich nach einem Verfahren gemäss Anspruch 1 bis 6, mit einem Gehalt an flüchtigen Bestandteilen von 1 bis 250 ppm.

8. Verwendung der Verfahrensprodukte gemäss Anspruch 1 bis 6 in bauchemischen Produkten, gegebenenfalls in Verbindung mit hydraulisch abbindenden Bindemitteln, für die Herstellung von Bauklebern, Putzen, Spachtelmassen, Fussbodenspachtelmassen, Verlaufsmassen, Dichtschlämmen, Fugenmörtel und Farben.

9. Verwendung der Verfahrensprodukte gemäss Anspruch 1 bis 6 als Bindemittel für Beschichtungsmittel und Klebemittel.

10. Verwendung der Verfahrensprodukte gemäss Anspruch 1 bis 6 als Beschichtungs- und Bindemittel für Textilien, Fasern, Holz und Papier.

11. Verwendung gemäß Anspruch 8 in Fliesenkleber und Vollwärmeschutzkleber.

## Claims

1. Process for the preparation of polymers stabilized with protective colloids and in the form of their water-redispersible powders or aqueous dispersions having a reduced content of volatile components by means of
a) emulsion or suspension polymerization of one or more monomers from the group consisting of vinyl esters, (meth)acrylates, vinyl aromatics, olefins, 1,3-dienes and vinyl halides and, if required, further monomers copolymerizable therewith,
b) aftertreatment of the polymer dispersion thus obtained by means of postpolymerization and/or distillation, and introduction of steam or inert gas to a residual content of volatile, nonaqueous components of < 2000 ppm, and then
c) spray-drying of the aftertreated polymer dispersion to a residual content of volatile, nonaqueous components of < 400 ppm, the dispersion being adjusted to a solids content of < 45% by weight before spraying and the spray-drying carried out with air at an inlet temperature of > 120°C, and, if required,
d) redispersing of the resulting powder in water.

2. Process according to Claim 1, **characterized in that** monomers or monomer mixtures which contain one or more monomers from the group consisting of vinyl acetate, vinyl esters of α-branched monocarboxylic acids having 9 to 11 C atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate and styrene are polymerized.

3. Process according to Claims 1 and 2, **characterized in that** the protective colloids used are partially hydrolysed polyvinyl alcohols having a degree of hydrolysis of 80 to 95 mol % and a Höppler viscosity of 1 to 30 mPa.s or partially hydrolysed, hydrophobically modified polyvinyl alcohols having a degree of hydrolysis of 80 to 95 mol % and a Höppler viscosity of 1 to 30 mPa.s.

4. Process according to any of Claims 1 to 3, **characterized in that** the aftertreatment in step b) is carried out up to a residual content of volatile, nonaqueous components of s 1000 ppm.

5. Process according to any of Claims 1 to 4, **characterized in that** a postpolymerization, if required with subsequent passing through or passing over of inert entraining gases, is carried out for the aftertreatment in step b).

6. Process according to any of Claims 1 to 5, **characterized in that** the content of volatile components in the powder is reduced to 1 to 250 ppm by the spray-drying in step c).

7. Water-redispersible polymer powder or aqueous polymer dispersion, obtainable by a process according to any of Claims 1 to 6, having a content of volatile components of 1 to 250 ppm.

8. Use of the product of the process according to any of Claims 1 to 6 in chemical products for the building industry, if necessary in combination with hydraulically setting binders, for the production of construction adhesives, renders, filling compounds, floor filling compounds, levelling compounds, sealing slurries, joint mortars and paints.

9. Use of the product of the process according to any of Claims 1 to 6 as a binder for coating materials and adhesives.

10. Use of the product of the process according to any of Claims 1 to 6 as a coating material or binder for textiles, fibres, wood and paper.

11. Use according to Claim 8 in tile adhesives and fully heat-insulating adhesives.

## Revendications

1. Procédé pour la préparation de polymères stabilisés avec des colloïdes protecteurs, sous forme de leurs poudres redispersables dans l'eau ou de leurs dispersions aqueuses à teneur réduite en composants volatils, par
a) polymérisation en émulsion ou suspension d'un ou plusieurs monomères choisis dans le groupe comprenant des esters vinyliques, des esters d'acide (méth)acrylique, des composés vinylaromatiques, des oléfines, des 1,3-diènes et des halogénures de vinyle et éventuellement d'autres monomères copolymérisables avec ceux-ci,
b) post-traitement de la dispersion de polymère obtenue, par post-polymérisation et/ou distillation, introduction de vapeur ou d'un gaz inerte jusqu'à une teneur résiduelle en composants volatils de < 2 000 ppm, et ensuite
c) séchage par atomisation de la dispersion de polymère post-traitée, jusqu'à une teneur résiduelle en composants non aqueux volatils de < 400 ppm, la dispersion étant ajustée à une teneur en matière solide de < 45 % en poids avant la pulvérisation, et le séchage par atomisation étant effectué avec de l'air à une température d'entrée de > 120°C, et éventuellement
d) redispersion dans de l'eau de la poudre ainsi obtenue.

2. Procédé selon la revendication 1, **caractérisé en ce que** sont polymérisés des monomères ou des mélanges de monomères qui contiennent un ou plusieurs monomères choisis dans le groupe constitué par l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène.

3. Procédé selon la revendication 1 ou 2, **caractérisé en ce qu'**on utilise en tant que colloïdes protecteurs des poly(alcool vinylique)s partiellement saponifiés ayant un degré d'hydrolyse de 80 à 95 % en moles et une viscosité Höppler de 1 à 30 mPa.s ou des poly(alcool vinylique)s partiellement saponifiés à modification hydrophobe ayant un degré d'hydrolyse de 80 à 95 % en moles et une viscosité Höppler de 1 à 30 mPa.s

4. Procédé selon l'une quelconque des revendications 1 à 3, **caractérisé en ce que** le post-traitement dans l'étape b) est effectué jusqu'à une teneur résiduelle en composants non aqueux volatils de ≤ 1 000 ppm.

5. Procédé selon l'une quelconque des revendications 1 à 4, **caractérisé en ce que** dans le post-traitement dans l'étape b) on effectue une post-polymérisation, éventuellement en faisant passer ensuite dans ou au-dessus du mélange des gaz inertes d'entraînement.

6. Procédé selon l'une quelconque des revendications 1 à 5, **caractérisé en ce qu'**avec le séchage par atomisation dans l'étape c) la teneur en composants volatils dans la poudre est abaissée jusqu'à 1 à 250 ppm.

7. Poudres de polymères redispersables dans l'eau et dispersions aqueuses de polymères, pouvant être obtenues conformément à un procédé selon l'une quelconque des revendications 1 à 6, ayant une teneur en composants volatils de 1 à 250 ppm.

8. Utilisation des produits obtenus par un procédé selon l'une quelconque des revendications 1 à 6, dans des produits chimiques pour le bâtiment, éventuellement en relation avec des liants à prise hydraulique, pour la production de colles pour le bâtiment, d'enduits, de matières de rebouchage, de matières de rebouchage pour sols, de matières à étaler, de matières d'étanchéité, de mortiers pour joints et de peintures.

9. Utilisation des produits obtenus par un procédé selon l'une quelconque des revendications 1 à 6, en tant que liant pour des agents de revêtement et des adhésifs.

10. Utilisation des produits obtenus par un procédé selon l'une quelconque des revendications 1 à 6, en tant qu'agent de revêtement et adhésif pour textiles, fibres, bois et papier.

11. Utilisation selon la revendication 8, dans des colles pour carreaux et des colles pour l'isolation thermique pleine.
